# FASCICULE DE BREVET EUROPEEN

(11) **EP 2 996 937 B1**
(45) Date de publication et mention de la délivrance du brevet: **11.01.2017**
(21) Numéro de dépôt: 14732257.2
(22) Date de dépôt: 09.05.2014
(51) Int. Cl.: B64B 1/40, B64C 27/20, B64C 17/04, B64C 27/22, B64C 39/02, B64B 1/44

(54) **DRONE HAUTE ALTITUDE**
DROHNE FÜR GROSSE HÖHEN
HIGH-ALTITUDE DRONE

(30) Priorité: 15.05.2013 FR 1354355
(43) Date de publication de la demande: 23.03.2016
(73) Titulaire: Ridengineering, 31120 Roques (FR)
(72) Inventeur: JONIOT, Jacques, F-31120 Roques (FR)
(74) Mandataire: Cabinet Plasseraud
(86) Numéro de dépôt international: PCT/FR2014/051078
(87) Numéro de publication internationale: WO 2014/184471

(56) Documents cités:
- FR-A- 1 082 009
- FR-A1- 2 926 787
- US-A- 5 071 383

## Description

La présente invention concerne un drone haute altitude.

Le domaine de la présente invention est plus particulièrement celui des drones appelés drones HALE, acronyme de Haute Altitude Longue Endurance.

Un drone est un engin volant sans pilote. Nombre de drones ressemblent beaucoup à des avions et sont propulsés comme un avion.

Des drones sont souvent utilisés à des fins militaires et/ou pour réaliser des missions d'observations. Le drone est alors envoyé au-dessus de la zone à observer en emportant avec lui tout le matériel de prise de vues et de transmission d'images nécessaire pour mener à bien son opération. Il est ainsi connu d'avoir des drones volant à plus de 10.000 m, par exemple 20.000 m et capables de rester plus de 24 heures dans le ciel avec une charge utile de l'ordre de la tonne ou de plusieurs tonnes.

Une autre application d'un drone HALE peut être par exemple de servir de plateforme stratosphérique. Il s'agit alors de placer à haute altitude, dans la stratosphère (entre 12 et 50 km d'altitude environ) un engin qui reste fixe par rapport au sol, tel un satellite géostationnaire mais à une altitude nettement moindre. Un tel drone peut de préférence rester plusieurs semaines ou plusieurs mois en position. Il sert alors par exemple relais de télécommunication pour de la téléphonie et/ou des images (télévision), pour de l'observation terrestre à des fins civiles ou militaires, ....

Des projets dans ce sens existent mais aucune solution proposée ne permet de maintenir une charge utile de l'ordre de quelques centaines de kg, ou de quelques tonnes plusieurs jours en position au dessus d'un objectif.

Le document FR2926787, qui montre toutes les caractéristiques du préambule de la revendication 1, est considéré comme l'état de la technique plus proche.

La présente invention a ainsi pour but de proposer un drone, ou une plateforme stratosphérique, qui puisse emporter une charge suffisante pour permettre par exemple de remplir une mission d'observation ou de relais de télécommunication, pendant une durée au moins de l'ordre d'un mois.

À cet effet, la présente invention propose un drone comportant :
- deux hélices annulaires contrarotatives définissant entre elle un plan dit plan équatorial supposé horizontal,
- des moyens d'entraînement des hélices,
- une charge disposée en dessous du plan équatorial, et
- des moyens permettant déplacer la charge par rapport au plan équatorial.

Selon la présente invention, ce drone comporte en outre :
- une enceinte dite enceinte supérieure remplie d'un gaz ou mélange gazeux de densité inférieure à 1 et disposée essentiellement au-dessus du plan équatorial, et
- une enceinte dite enceinte inférieure remplie d'un gaz ou mélange gazeux de densité inférieure à 1 et disposée essentiellement au-dessous du plan équatorial, la charge étant placée à l'intérieur de l'enceinte inférieure.

Cette combinaison originale permet d'avoir un drone avec une consommation énergétique réduite lui permettant de remplir une mission longue avec une charge relativement importante. Les enceintes remplies de gaz léger permettent de limiter la consommation énergétique pour le maintien en l'air du drone et de la charge. La structure générale (hélices annulaires contrarotatives, disposition des enceintes, etc.) permet une optimisation autorisant de longs séjours dans l'atmosphère sans avoir besoin de se recharger en énergie.

Dans une forme de réalisation préférée car permettant d'avoir une structure très simple et très légère en étant toutefois efficace, chaque hélice annulaire comporte une première pièce annulaire, une seconde pièce annulaire de diamètre supérieur à celui de la première pièce annulaire et des pales reliant chacune la première pièce annulaire à la seconde pièce annulaire. Pour une bonne rigidité de chaque ensemble de pièces formant une hélice, chaque pale est avantageusement rigidement encastrée dans la première pièce annulaire et dans la seconde pièce annulaire.

Toujours dans un souci de simplification de la structure et de l'optimisation du poids et des besoins en énergie du drone, on peut avantageusement prévoir que les moyens d'entrainement des hélices comportent au moins un arbre disposé dans le plan équatorial, entrainé en rotation par un moteur et muni d'une roue dentée qui engrène avec une structure de type crémaillère prévue sur chacune des deux hélices annulaires.

De préférence, les moyens d'entrainement des hélices comportent au moins un moteur électrique. Malgré le poids des batteries, l'électricité est ici une source d'énergie privilégiée car elle permet notamment une recharge en altitude à l'aide de panneaux solaires.

Il est prévu que, dans une forme de réalisation préférée, la charge soit suspendue à un pendule rigide entrainé en rotation autour de deux axes perpendiculaires disposés dans le plan équatorial. En actionnant le pendule, le drone est "déséquilibré" et ce déséquilibre est mis à profit pour orienter le drone lors de ses déplacements. Il est ici avantageux que la charge utile (qui peut correspondre à des moyens de transmission de communication, à du matériel d'observation, ou autre) soit également utilisé activement dans la commande du déplacement du drone.

L'enceinte supérieure est par exemple réalisée en polyéthylène téréphtalate biaxialement orienté (connu aussi sous la marque déposée Mylar). L'enceinte inférieure est quant à elle de préférence réalisée dans un matériau transparent.

Une manière avantageuse, car légère, fiable et efficace, de relier les enceintes à la structure rigide du drone comprenant notamment les hélices et leurs moyens d'entrainement, prévoit que les deux enceintes sont reliées par un filet sensiblement de forme sphérique les entourant. La structure rigide est alors prisonnière au moins partiellement entre les deux enceintes.

Si de l'énergie électrique est utilisée à bord du drone, on peut alors prévoir par exemple que l'enceinte supérieure est recouverte de cellules photoélectriques. On peut aussi prévoir de telles cellules sur les moyens permettant de déplacer la charge. On peut adjoindre à la charge des batteries. Les panneaux se trouvent alors au plus près des batteries permettant une optimisation de la structure et du poids du drone.

Une variante de réalisation avantageuse prévoit qu'un filet relie les deux enceintes en entourant une partie de chacune des enceintes proche du plan équatorial, et que la partie de chaque enceinte non entourée par le filet est déformable. Le fait de prévoir une déformation des enceintes permet une régulation de la pression à l'intérieur de celles-ci. En effet, le drone est parfois éclairé (et chauffé) par le Soleil et parfois à l'ombre. Les enceintes déformables permettent ainsi une adaptation aux conditions extérieures. Dans cette variante de réalisation, pour contrôler la déformation des enceintes, on prévoit que des tendeurs élastiques sont disposés à l'intérieur de chaque enceinte en étant fixés à l'intérieur de celles-ci.

Pour permettre d'équilibrer les pressions entre les deux enceintes, on peut par exemple prévoir qu'un conduit permet la mise en communication du volume intérieur de l'enceinte supérieure avec le volume intérieur de l'enceinte inférieure. Pour mieux maitriser les pressions dans chacune des enceintes, il est avantageux qu'une vanne trois voies soit disposée dans le conduit.

Dans une variante de réalisation permettant d'améliorer l'aérodynamique du drone selon l'invention, l'enceinte inférieure présente avantageusement du côté opposé au plan équatorial une zone sensiblement conique. Le drone présente ainsi une forme aérodynamique avec un coefficient de trainée réduit.

Des détails et avantages de la présente invention apparaitront mieux de la description qui suit, faite en référence au dessin schématique annexé sur lequel :
La figure 1 est une vue en perspective d'une première forme de réalisation d'un drone selon la présente invention,
La figure 2 est une vue en élévation du drone de la figure 1,
La figure 3 est une vue en coupe par un plan médian vertical du drone de la figure 1,
La figure 4 est une vue de dessus du drone des figures précédentes,
La figure 5 est une vue en perspective d'une deuxième forme de réalisation d'un drone représenté dans une première configuration,
La figure 6 est une vue similaire à celle de la figure précédente dans une seconde configuration,
La figure 7 est une vue en élévation du drone correspondant à la figure 5,
La figure 8 est une vue en élévation du drone correspondant à la figure 6,
Les figures 9 et 10 sont des vues similaires à celle de la figure 3 pour respectivement la première configuration et la seconde configuration de la deuxième forme de réalisation des figures 5 et 6,
Les figures 11 et 12 sont des vues de dessus pour respectivement la première configuration et la seconde configuration de la deuxième forme de réalisation des figures 5 et 6, et
La figure 13 est une vue en élévation d'une autre forme de réalisation d'un drone selon la présente invention.

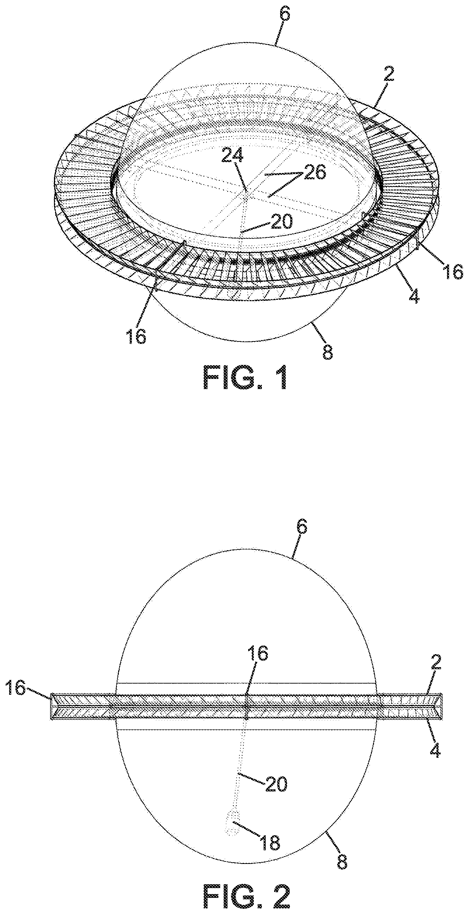

Dans une première forme de réalisation telle que représentée sur les figures 1 à 4, un drone selon la présente invention comporte une hélice annulaire supérieure 2, une hélice annulaire inférieure 4 formant un ensemble de deux hélices annulaires contrarotatives, une enceinte supérieure 6, une enceinte inférieure 8 et un mécanisme pour l'entrainement des hélices.

Les deux hélices sont disposées symétriquement par rapport à un plan appelé par la suite plan équatorial. On supposera dans la suite de la description que ce plan est horizontal. En outre, les deux hélices sont disposées parallèlement l'une par rapport à l'autre. Elles sont ainsi espacées l'une de l'autre avec un écartement constant sur toute la périphérie des hélices.

Les deux hélices présentent des structures semblables. Une forme de réalisation préférée de la présente invention prévoit que la structure de ces hélices est très simple. Une hélice annulaire, selon un mode de réalisation préféré, comporte alors, d'une part, des pales 10 et, d'autre part, une pièce annulaire interne 12 et une pièce annulaire externe 14.

Les pales 10 sont par exemple en forme de lames planes. Elles sont orientées de manière à être inclinée par rapport à l'horizontale (ou par rapport au plan équatorial) et sont régulièrement réparties sur 360°. Chaque pale est, dans une forme de réalisation préférée, encastrée à une extrémité dans la pièce annulaire interne 12 et à son autre extrémité dans la pièce annulaire externe 14.

La pièce annulaire interne 12 est par exemple une pièce annulaire présentant une section en I de manière à présenter une grande rigidité. L'âme du I s'étend par exemple sensiblement verticalement (c'est-à-dire sensiblement perpendiculairement au plan équatorial).

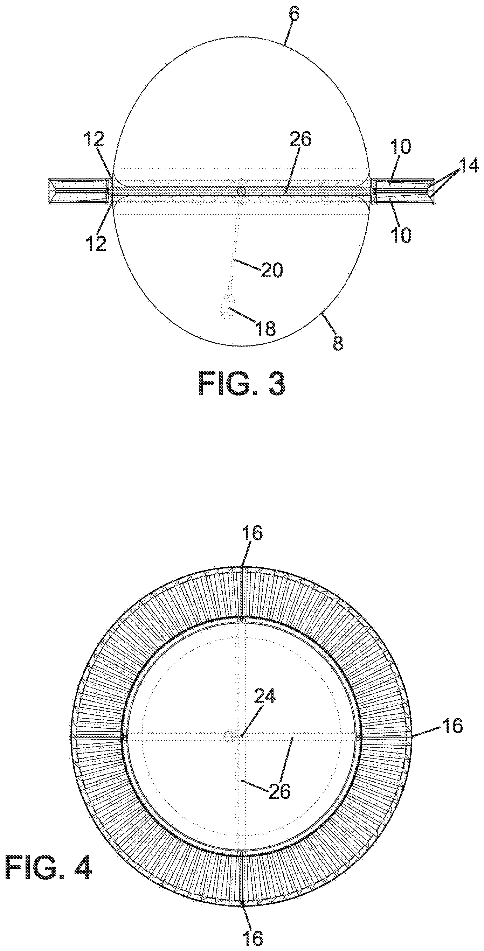

La pièce annulaire externe 14 dans la forme de réalisation représentée présente également une section en I mais l'âme du I est inclinée par rapport à l'horizontale. Dans la forme de réalisation illustrée, les deux pièces annulaires externes 14 (une pour chaque hélice), en coupe transversale (figure 3), forment un V dont la pointe est orientée vers l'intérieur des hélices.

Les deux hélices sont maintenues en position à l'aide de quatre cadres 16 régulièrement répartis à la périphérie des hélices. Chaque cadre 16 est disposé dans un plan vertical radial (par rapport au centre des hélices annulaires). Chaque cadre 16 présente un pourtour réalisé par exemple à partir d'un profilé coupé et assemblé pour former ledit pourtour ainsi qu'une traverse venant prendre place entre les deux hélices dans le plan équatorial. Chaque hélice est en appui par l'intermédiaire de roulements, d'une part, sur la traverse équatoriale et, d'autre part, sur le pourtour du cadre 16.

L'enceinte supérieure 6 est par exemple de forme sensiblement hémisphérique et présente un diamètre légèrement inférieur au diamètre des pièces annulaires internes 12. Elle est par exemple réalisée en polyéthylène téréphtalate biaxialement orienté, plus connu sous la marque déposée Mylar.

L'enceinte inférieure 8 présente une forme globale symétrique à celle de l'enceinte supérieure 6 et est elle aussi par exemple réalisée en Mylar (marque déposée).

Les deux enceintes sont des enceintes étanches remplies d'un gaz plus léger que l'air, par exemple de l'hydrogène ou de l'hélium. Toutefois, alors que l'enceinte supérieure 6 ne contient avantageusement que du gaz, l'enceinte inférieure 8 loge une charge utile 18 portée par l'extrémité d'un pendule 20 suspendu à un mécanisme décrit plus loin.

Les deux enceintes peuvent être reliées entre elles et/ou au mécanisme d'entrainement des hélices. On peut par exemple prévoir un filet de forme globale approximativement sphérique qui vient retenir les deux enceintes en position l'une par rapport à l'autre.

Il peut être envisagé de relier le volume intérieur de l'enceinte supérieure 6 avec le volume intérieur de l'enceinte inférieure 8. Un manche à air (non illustré), traversant le plan équatorial, peut ainsi être prévu.

Dans le cas où on souhaite maintenir à la même pression en toutes circonstances dans l'enceinte supérieure 6 et dans l'enceinte inférieure 8, un simple manche à air est suffisant. Toutefois, il peut être avantageux de tolérer une différence de pression et de la maîtriser. On prévoira alors de préférence une vanne dans le manche à air qui permet dans une position d'équilibrer les pressions dans les enceintes et dans une autre position d'isoler le volume intérieur d'une enceinte du volume intérieur de l'autre enceinte. De manière encore préférée, la vanne prévue pourra être une vanne trois voies, une voie en communication avec le volume intérieur de l'enceinte supérieure 6, une voie en communication avec le volume intérieur de l'enceinte inférieure 8 et une voie en communication avec l'extérieur. De la sorte, il devient possible de décharger à l'air libre une partie du gaz (hélium par exemple) contenu dans l'enceinte supérieure 6 et/ou l'enceinte inférieure 8. Ceci peut être envisagé notamment lors d'une opération d'atterrissage du drone.

Le mécanisme d'entrainement des hélices comporte quatre moteurs logés au sein d'une structure centrale 24 se présentant sous la forme de deux tubes cylindriques circulaires montés en croix dans le plan équatorial. Chaque moteur est monté à l'extrémité d'un tube 26 et présente un arbre de sortie portant un pignon qui vient engrener à la fois avec une crémaillère portée par un bord inférieur de la pièce annulaire interne 12 de l'hélice annulaire supérieure 2 et avec une crémaillère portée par un bord supérieur de la pièce annulaire interne 12 de l'hélice annulaire inférieure 4. L'arbre de sortie de chaque moteur est aligné dans le plan équatorial avec la traverse d'un cadre 6. On peut par exemple prévoir que cette traverse porte un palier pour un pignon d'entrainement des hélices.

Le pendule 20 est articulé au niveau de l'intersection des tubes 26. Un mécanisme permet d'orienter le pendule par rapport aux tubes 26. Dans une position dite position neutre, le pendule 20 s'étend à la verticale et est donc perpendiculaire aux tubes 26. Deux moteurs sont prévus ici pour permettre l'orientation du pendule 20 dans deux directions, de préférence perpendiculaires. On peut par exemple prévoir qu'un moteur entraine le pendule en rotation autour d'un axe parallèle à un tube 26 (le pendule se déplaçant alors dans un plan passant par l'autre tube 26) et qu'un autre moteur entraine le pendule en rotation autour d'un axe parallèle à l'autre tube 26 (entrainant alors un déplacement du pendule dans le plan vertical contenant le premier tube 26).

Les quatre moteurs aux extrémités des tubes 26 entrainent les hélices en rotation, une hélice dans un premier sens et l'autre dans le sens opposé. Les deux autres moteurs, en modifiant la position du pendule par rapport aux tubes 26 vont provoquer une inclinaison des tubes 26 par rapport à l'horizontale, le pendule 20 tendant à rester vertical.

Les quatre moteurs entrainant les hélices, dans une position neutre du pendule, seront utilisés pour faire varier l'altitude du drone. Lorsque le pendule est incliné par rapport à sa position neutre, ces quatre moteurs permettront en outre de réaliser un déplacement latéral du drone.

La forme annulaire des hélices permet d'avoir une grande surface portante sur un diamètre relativement important. La vitesse de rotation (en tours par minute) des hélices peut ainsi être relativement faible permettant de limiter la consommation énergétique des moteurs.

Pour l'alimentation des moteurs électriques embarqués à bord du drone, des batteries sont prévues. Celles-ci peuvent prendre place avec la charge utile 18 sur le pendule 20. Des cellules photovoltaïques peuvent avantageusement être prévues par exemple sur le pendule 20 pour assurer une recharge au moins partielle des batteries lorsque lesdites cellules sont exposées au soleil. Bien entendu, pour permettre l'éclairement des cellules et également à la charge utile de communiquer avec l'extérieur, l'enceinte inférieure 8 sera de préférence transparente.

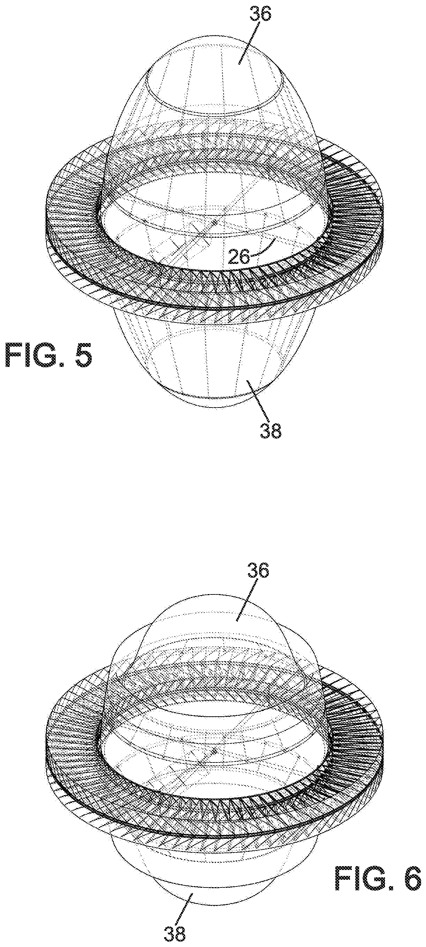

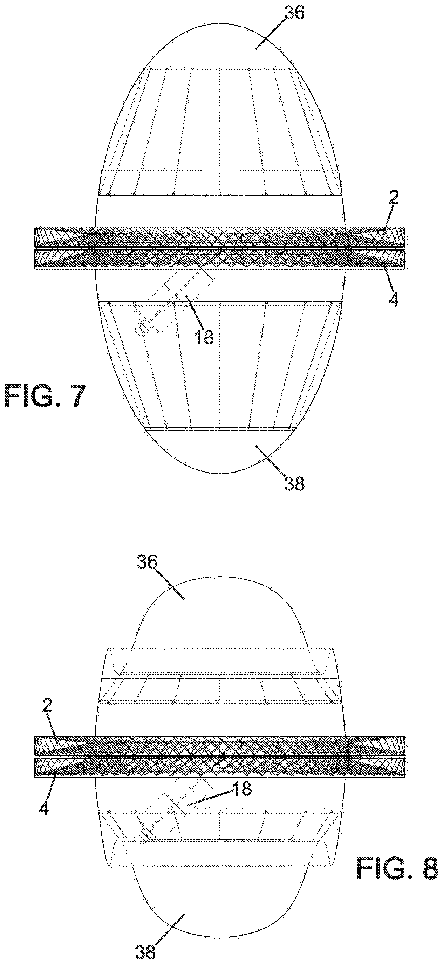

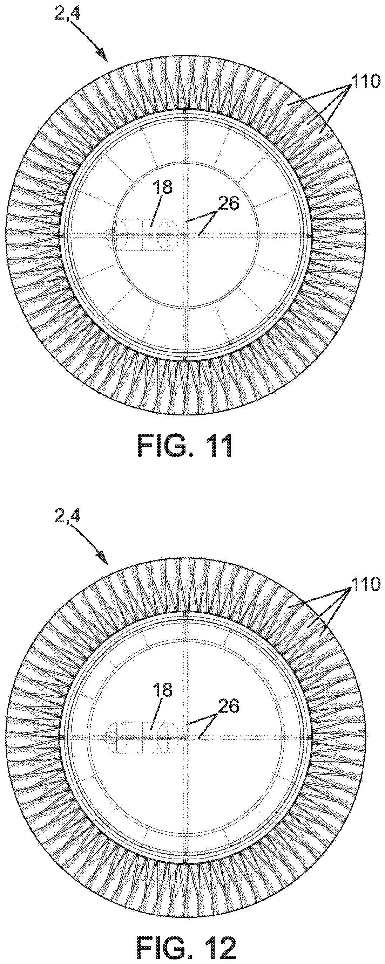

La deuxième forme de réalisation des figures 5 à 12 présente globalement la même structure que celle décrite en référence aux figures 1 à 4. La différence principale entre les deux formes de réalisation représentée concerne l'enceinte inférieure et l'enceinte supérieure. Les autres éléments similaires dans les deux formes de réalisation de l'invention présentées ici reprennent donc les mêmes références.

L'enceinte supérieure 36 et l'enceinte inférieure 38 dans la deuxième forme de réalisation présentent chacune une forme plus allongée que pour la première forme de réalisation des figures 1 à 4. Ces deux enceintes sont toujours disposées de manière symétrique par rapport au plan équatorial. Elles peuvent être ou non reliées entre elles par un manche à air et/ou une vanne qui permettrait d'équilibrer les pressions entre les volumes intérieurs de ces enceintes.

Comme illustré par les figures, cette deuxième forme de réalisation est prévue pour pouvoir prendre deux configurations (ainsi que toutes les positions intermédiaires entre ces deux configurations) illustrées respectivement sur les figures 5, 7, 9 et 11 et sur les figures 6, 8, 10 et 12. La première configuration peut être par exemple appelée configuration jour. Dans cette configuration les enceintes sont entièrement déployées. En effet, le jour le drone est exposé au soleil qui vient chauffer le gaz contenu dans les enceintes. Le gaz se dilate et vient alors "gonfler" les enceintes. Dans la seconde configuration, appelée configuration nuit, le volume de chaque enceinte est diminué. Dans cette configuration, le gaz dans les enceintes est bien plus froid et occupe un volume moins important (et/ou est à pression moindre).

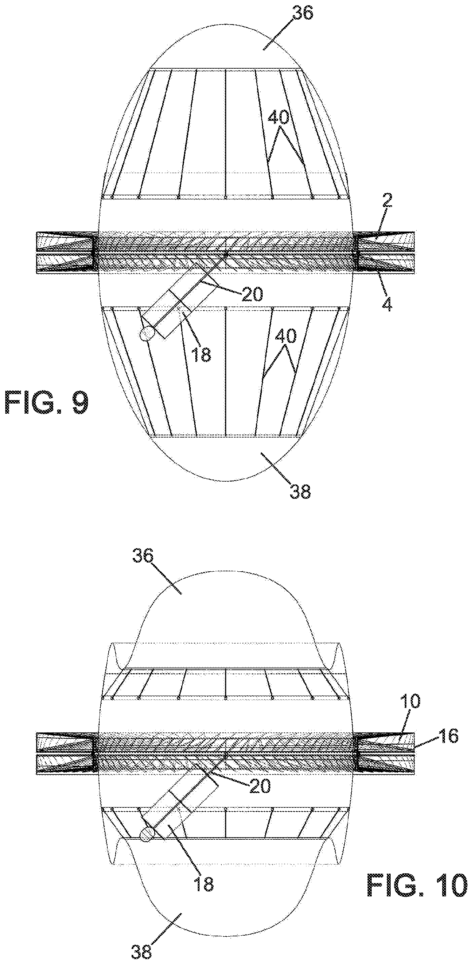

Dans cette deuxième forme de réalisation, au lieu d'avoir un filet englobant entièrement les deux enceintes, on prévoit un filet qui entoure la partie de l'enceinte inférieure 38 la plus proche du plan équatorial et la partie de l'enceinte supérieure 36 la plus proche du plan équatorial de manière à laisser la partie de chacune des enceintes plus éloignée du plan équatorial se déformer. Bien entendu, la déformation doit être contrôlée. À l'extérieur, le filet extérieur assure un maintien pour les zones proches du plan équatorial. À l'intérieur, comme illustré sur les figures 9 et 10, des tendeurs élastiques 40 régulièrement répartis et reliant des points de l'enceinte concernée se trouvant à une première altitude par rapport au plan équatorial à des points se trouvant à une seconde altitude par rapport au plan équatorial. Ainsi, lorsque la pression du gaz dans une enceinte augmente, elle provoque l'extension des tendeurs élastiques 40 vers la position illustrée sur la figure 9 tandis que lorsque cette pression diminue, les tendeurs élastiques se rétractent vers la position illustrée sur la figure 10.

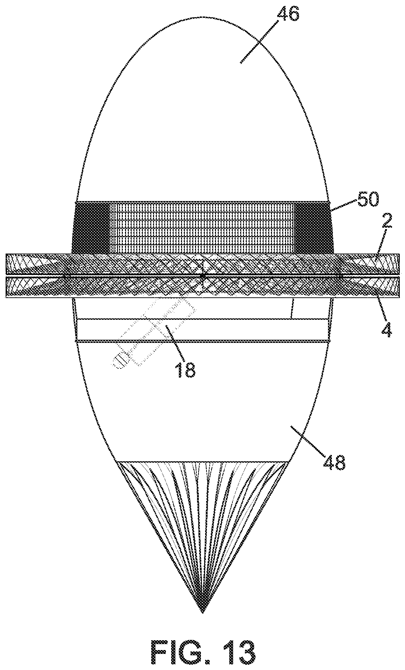

La figure 13 illustre une autre variante de réalisation présentant une même structure générale que celle décrite ci-dessus, c'est-à-dire avec un ensemble moteur comportant entre autres une hélice annulaire supérieure 2, une hélice annulaire inférieure 4 symétriques par rapport à un plan équatorial, une enceinte supérieure 46 disposée essentiellement au-dessus du plan équatorial et une enceinte inférieure 48 disposée essentiellement en dessous du plan équatorial. Le volume intérieur de l'enceinte supérieure 46 peut être ou non en communication avec le volume intérieur de l'enceinte inférieure 48.

L'originalité de cette forme de réalisation, qui peut être basée sur la première forme de réalisation (figures 1 à 4) ou sur la deuxième forme de réalisation (figures 5 à 12) est d'avoir des formes d'enceintes différentes. Comme il apparaît clairement sur la figure 13, l'enceinte inférieure 48 présente une extrémité conique conférant de la sorte à l'ensemble du drone une forme globale rappelant une goutte d'eau. Une telle forme est favorable aérodynamiquement et permet de participer à la limitation de la consommation énergétique du dispositif.

On a également représenté sur une base de l'enceinte supérieure 46 des panneaux solaires 50 qui sont de préférence disposés à la périphérie de cette enceinte supérieure 46. Il est préférable d'avoir les panneaux solaires 50 sur l'enceinte supérieure 48 pour qu'ils bénéficient au maximum de l'ensoleillement mais il ne faut pas non plus déséquilibrer le drone.

Un drone selon la présente invention présente une structure légère qui permet de limiter ses besoins énergétiques pour son maintien en l'air et pour ses déplacements. En outre, les moyens d'entrainements utilisés, notamment les hélices annulaires contrarotatives permettent également de limiter la consommation énergétique car les vitesses de rotation nécessaires pour assurer une sustentation et/ou un déplacement sont faibles, ce qui limite les pertes par frottements, etc..

Un drone selon la présente invention peut par exemple prendre position au-dessus d'une position donnée pendant des jours, voire des semaines. Il se positionne à une altitude par exemple de 20 à 25 km. Son altitude peut par exemple changer de 1 km ou 2 km (ou plus ou moins) entre le jour (c'est-à-dire lorsque le drone est éclairé par le soleil) et la nuit (lorsqu'il est à l'ombre).

Le diamètre extérieur des hélices peut être, à titre d'exemple illustratif non limitatif, de l'ordre de 50 à 100 m. Le diamètre intérieur des hélices est quant à lui par exemple de l'ordre de 35 à 75 m.

Des essais ont montré que la structure originale décrite ci-dessus pour réaliser des drones de type HALE est également avantageuse pour réaliser des drones de taille moindre et destiné à se déplacer dans l'atmosphère à des altitudes de l'ordre de quelques centaines mètres. De tels drones présentent alors une hauteur qui peut être par exemple de 2,50 m à 3 m. Le diamètre extérieur des hélices est alors par exemple de l'ordre de 1,50 m à 2 m.

On peut donc envisager toute une gamme de drones dont les dimensions vont de quelques mètres à quelques dizaines de mètres.

Le fait d'avoir des pales fixes (par rapport aux pièces annulaires entre lesquelles elles sont montées) simplifie grandement la structure, et limite ainsi aussi son poids.

De par sa simplicité, ce drone est facilement montable et démontable. Même pour les drones de grande taille, il peut être envisagé d'embarquer un drone (démonté) dans un avion cargo. Le matériel nécessaire pour le montage du drone peut, selon la taille de l'avion, prendre place dans la même soute ou être embarqués dans un autre avion. Un drone selon la présente invention peut donc également facilement être acheminé sur un site où il va être utilisé.

Bien entendu, la présente invention ne se limite pas aux formes de réalisation décrites et aux variantes évoquées. Elle concerne également toute forme de réalisation à la portée de l'homme du métier dans le cadre des revendications ci-après.

## Revendications

1. Drone comportant :
- deux hélices annulaires (2, 4) contrarotatives définissant entre elle un plan dit plan équatorial supposé horizontal,
- des moyens d'entraînement des hélices,
- une charge (18) disposée en dessous du plan équatorial, et
- des moyens (20) permettant déplacer la charge (18) par rapport au plan équatorial,
**caractérisé en ce qu'**il comporte en outre :
- une enceinte dite enceinte supérieure (6 ; 36 ; 46) remplie d'un gaz ou mélange gazeux plus léger que l'air et disposée essentiellement au-dessus du plan équatorial, et
- une enceinte dite enceinte inférieure (8 ; 38 ; 48) remplie d'un gaz ou mélange gazeux plus léger que l'air et disposée essentiellement au-dessous du plan équatorial, la charge (18) étant placée à l'intérieur de l'enceinte inférieure (8 ; 38 ; 48).

2. Drone selon la revendication 1, **caractérisé en ce que** chaque hélice annulaire (2, 4) comporte une première pièce annulaire (12), une seconde pièce annulaire (14) de diamètre supérieur à celui de la première pièce annulaire (12) et des pales (10) reliant chacune la première pièce annulaire (12) à la seconde pièce annulaire (14).

3. Drone selon la revendication 2, **caractérisé en ce que** chaque pale (10) est rigidement encastrée dans la première pièce annulaire (12) et dans la seconde pièce annulaire (14).

4. Drone selon l'une des revendications 1 à 3, **caractérisé en ce que** les moyens d'entrainement des hélices comportent au moins un arbre disposé dans le plan équatorial, entrainé en rotation par un moteur et muni d'une roue dentée qui engrène avec une structure de type crémaillère prévue sur chacune des deux hélices annulaires (2, 4).

5. Drone selon l'une des revendications 1 à 4, **caractérisé en ce que** les moyens d'entrainement des hélices (2, 4) comportent au moins un moteur électrique.

6. Drone selon l'une des revendications 1 à 5, **caractérisé en ce que** la charge (18) est suspendue à un pendule (20) rigide entrainé en rotation autour de deux axes (26) perpendiculaires disposés dans le plan équatorial.

7. Drone selon l'une des revendications 1 à 6, **caractérisé en ce que** l'enceinte supérieure (6 ; 36 ; 46) est réalisée en polyéthylène téréphtalate biaxialement orienté.

8. Drone selon l'une des revendications 1 à 7, **caractérisé en ce que** l'enceinte inférieure (8 ; 38 ; 48) est réalisée dans un matériau transparent.

9. Drone selon l'une des revendications 1 à 8, **caractérisé en ce que** les deux enceintes (2, 4) sont reliées par un filet sensiblement de forme sphérique les entourant.

10. Drone selon l'une des revendications 1 à 9, **caractérisé en ce que** l'enceinte supérieure (6 ; 36) est recouverte de cellules photoélectriques.

11. Drone selon l'une des revendications 1 à 8, **caractérisé en ce qu'**un filet relie les deux enceintes (2, 4) en entourant une partie de chacune des enceintes (36, 38) proche du plan équatorial, et **en ce que** la partie de chaque enceinte non entourée par le filet est déformable.

12. Drone selon la revendication 11, **caractérisé en ce que** des tendeurs élastiques (40) sont disposés à l'intérieur de chaque enceinte (36, 38) en étant fixés à l'intérieur de celles-ci.

13. Drone selon l'une des revendications 1 à 2, **caractérisé en ce qu'**un conduit permet la mise en communication du volume intérieur de l'enceinte supérieure (6 ; 36 ; 46) avec le volume intérieur de l'enceinte inférieure (8 ; 38 ; 48).

14. Drone selon la revendication 13, **caractérisé en ce qu'**une vanne trois voies est disposée dans le conduit.

15. Drone selon l'une des revendications 1 à 14, **caractérisé en ce que** l'enceinte inférieure (48) présente du côté opposé au plan équatorial une zone sensiblement conique.

## Patentansprüche

1. Drohne, umfassend:
- zwei gegenläufige ringförmige Propeller (2, 4), die zwischen ihnen eine Ebene, genannt Äquatorialebene, definieren, die als horizontal angenommen wird,
- Mittel zum Antrieb der Propeller,
- eine Last (18), die unter der Äquatorialebene angeordnet ist, und
- Mittel (20), die es ermöglichen, die Last (18) in Bezug auf die Äquatorialebene zu bewegen,
**dadurch gekennzeichnet, dass** sie ferner Folgendes umfasst:
- eine Hülle, genannt obere Hülle (6; 36; 46), die mit einem Gas oder einem Gasgemisch gefüllt ist, das leichter als Luft ist, und im Wesentlichen über der Äquatorialebene angeordnet ist, und
- eine Hülle, genannt untere Hülle (8; 38; 48), die mit einem Gas oder einem Gasgemisch gefüllt ist, das leichter als Luft ist, und im Wesentlichen unter der Äquatorialebene angeordnet ist, wobei die Last (18) im Inneren der unteren Hülle (8; 38; 48) platziert ist.

2. Drohne nach Anspruch 1, **dadurch gekennzeichnet, dass** jeder ringförmige Propeller (2, 4) Folgendes umfasst: einen ersten ringförmigen Teil (12), einen zweiten ringförmigen Teil (14), dessen Durchmesser größer als jener des ersten ringförmigen Teils (12) ist, und Flügel (10), die den ersten ringförmigen Teil (12) jeweils mit dem zweiten ringförmigen Teil (14) verbinden.

3. Drohne nach Anspruch 2, **dadurch gekennzeichnet, dass** jeder Flügel (10) starr in den ersten ringförmigen Teil (12) und in den zweiten ringförmigen Teil (14) eingebettet ist.

4. Drohne nach einem der Ansprüche 1 bis 3, **dadurch gekennzeichnet, dass** die Mittel zum Antreiben der Propeller wenigstens eine in der Äquatorialebene angeordnete Welle umfassen, die von einem Motor drehangetrieben wird und mit einem Zahnrad versehen ist, das in Eingriff mit einer Struktur vom Typ Zahnstange steht, die an jedem der zwei ringförmigen Propeller (2, 4) vorgesehen ist.

5. Drohne nach einem der Ansprüche 1 bis 4, **dadurch gekennzeichnet, dass** die Mittel zum Antreiben der Propeller (2, 4) wenigstens einen Elektromotor umfassen.

6. Drohne nach einem der Ansprüche 1 bis 5, **dadurch gekennzeichnet, dass** die Last (18) an einem starren Pendel (20) aufgehängt ist, das um zwei senkrecht zueinander stehende Achsen (26) drehangetrieben wird, die in der Äquatorialebene angeordnet sind.

7. Drohne nach einem der Ansprüche 1 bis 6, **dadurch gekennzeichnet, dass** die obere Hülle (6; 36; 46) aus biaxial orientiertem Polyethylenterephthalat hergestellt ist.

8. Drohne nach einem der Ansprüche 1 bis 7, **dadurch gekennzeichnet, dass** die untere Hülle (8; 38; 48) aus einem transparenten Material hergestellt ist.

9. Drohne nach einem der Ansprüche 1 bis 8, **dadurch gekennzeichnet, dass** die zwei Hüllen (2, 4) durch ein Netz von im Wesentlichen kugelförmiger Form miteinander verbunden sind, welches sie umgibt.

10. Drohne nach einem der Ansprüche 1 bis 9, **dadurch gekennzeichnet, dass** die obere Hülle (6; 36) mit photoelektrischen Zellen bedeckt ist.

11. Drohne nach einem der Ansprüche 1 bis 8, **dadurch gekennzeichnet, dass** ein Netz die beiden Hüllen (2, 4) miteinander verbindet, indem es einen Teil von jeder der Hüllen (36, 38) in der Nähe der Äquatorialebene umgibt, und dass der Teil jeder Hülle, der nicht von dem Netz umgeben ist, verformbar ist.

12. Drohne nach Anspruch 11, **dadurch gekennzeichnet, dass** elastische Spannelemente (40) im Inneren jeder Hülle (36, 38) angeordnet sind, wobei sie in ihrem Inneren befestigt sind.

13. Drohne nach einem der Ansprüche 1 bis 2, **dadurch gekennzeichnet, dass** eine Leitung es ermöglicht, eine Kommunikation zwischen dem Innenvolumen der oberen Hülle (6; 36; 46) und dem Innenvolumen der unteren Hülle (8; 38; 48) herzustellen.

14. Drohne nach Anspruch 13, **dadurch gekennzeichnet, dass** ein Dreiwegeventil in der Leitung angeordnet ist.

15. Drohne nach einem der Ansprüche 1 bis 14, **dadurch gekennzeichnet, dass** die untere Hülle (48) an der der Äquatorialebene entgegengesetzten Seite einen im Wesentlichen kegelförmigen Bereich umfasst.

## Claims

1. Drone comprising:
- two contra-rotating annular propellers (2, 4) defining a plane therebetween which is referred to as the equatorial plane and is assumed to be horizontal,
- means for driving the propellers,
- a load (18) arranged below the equatorial plane, and
- means (20) for moving the load (18) relative to the equatorial plane,
**characterised in that** it further comprises:
- an enclosure referred to as an upper enclosure (6; 36; 46), filled with a gas or gaseous mixture lighter than air and arranged substantially above the equatorial plane, and
- an enclosure referred to as a lower enclosure (8; 38; 48), filled with a gas or gaseous mixture lighter than air and arranged substantially below the equatorial plane, the load (18) being placed within the lower enclosure (8; 38; 48).

2. Drone according to claim 1, wherein each annular propeller (2, 4) comprises a first annular part (12), a second annular part (14) of larger diameter than the first annular part (12), and blades (10) which each connect the first annular part (12) to the second annular part (14).

3. Drone according to claim 2, wherein each blade (10) is rigidly embedded in the first annular part (12) and second annular part (14).

4. Drone according to one of claims 1 to 3, wherein the means for driving the propellers comprise at least one shaft positioned in the equatorial plane, rotated by a motor and provided with a gear which meshes with a rack-type structure provided on each of the two annular propellers (2, 4).

5. Drone according to one of claims 1 to 4, wherein the means for driving the propellers (2, 4) comprise at least one electric motor.

6. Drone according to one of claims 1 to 5, wherein the load (18) is suspended on a rigid pendulum (20) pivoted about two perpendicular axes (26) positioned in the equatorial plane.

7. Drone according to one of claims 1 to 6, wherein the upper enclosure (6; 36; 46) is made of biaxially-oriented polyethylene terephthalate.

8. Drone according to one of claims 1 to 7, wherein the lower enclosure (8; 38; 48) is made of a transparent material.

9. Drone according to one of claims 1 to 8, wherein the two enclosures (2, 4) are connected by a substantially spherical net which surrounds them.

10. Drone according to one of claims 1 to 9, wherein the upper enclosure (6; 36) is covered with photoelectric cells.

11. Drone according to one of claims 1 to 8, wherein a net connects the two enclosures (2, 4) by surrounding a portion of each of the enclosures (36, 38) that is close to the equatorial plane, and wherein the portion of each enclosure not surrounded by the net is deformable.

12. Drone according to claim 11, wherein elastic tensioners (40) are arranged inside each enclosure (36, 38) and are attached to the inside thereof.

13. Drone according to one of claims 1 to 2, wherein a duct establishes communication between the internal volume of the upper enclosure (6; 36; 46) and the internal volume of the lower enclosure (8; 38; 48).

14. Drone according to claim 13, wherein a three-way valve is placed in the duct.

15. Drone according to one of claims 1 to 14, wherein the lower enclosure (48) has a substantially conical area on the side away from the equatorial plane.
